# EUROPEAN PATENT SPECIFICATION

(11) **EP 4 386 601 B1**
(45) Date of publication and mention of the grant of the patent: **01.01.2025**
(21) Application number: 23213390.0
(22) Date of filing: 30.11.2023
(51) Int. Cl.: G06F 8/53, G06F 21/57, G06F 8/41

(54) **SYSTEM AND METHOD FOR AUTO REPAIRING VULNERABLE CODE PROGRAM FRAGMENTS OF A SOFTWARE**
SYSTEM UND VERFAHREN ZUR AUTOMATISCHEN REPARATUR VON ANFÄLLIGEN CODE-PROGRAMMFRAGMENTEN EINER SOFTWARE
SYSTÈME ET PROCÉDÉ DE RÉPARATION AUTOMATIQUE DE FRAGMENTS DE PROGRAMME DE CODE VULNÉRABLE D'UN LOGICIEL

(30) Priority: 16.12.2022 IN 202221073066
(43) Date of publication of application: 19.06.2024
(73) Proprietor: Tata Consultancy Services Limited, Maharashtra (IN)
(72) Inventor: VIDHANI, KUMAR MANSUKHLAL, 411013 Pune, Maharashtra (IN); SINHA, SANKET ACHAL, 411013 Pune, Maharashtra (IN); BHATTACHAR, RAJAN MINDIGAL ALASINGARA, 560009 Bangalore, Karnataka (IN); LODHA, SACHIN PREMSUKH, 411013 Pune, Maharashtra (IN); SINGH DILIP THAKUR, MEENA, 560066 Bangalore, Karnataka (IN)
(74) Representative: Goddar, Heinz J.

(56) References cited:
- US-A1- 2021 056 210
- HU YIKUN ET AL: "Automatically Patching Vulnerabilities of Binary Programs via Code Transfer From Correct Versions", IEEE ACCESS, vol. 7, 27 February 2019 (2019-02-27), pages 28170 - 28184, XP011715196, DOI: 10.1109/ACCESS.2019.2901951

## Description

### CROSS-REFERENCE TO RELATED APPLICATIONS AND PRIORITY

The present application claims priority to Indian application, Application No. 202221073066, filed in India on December 16, 2022.

### TECHNICAL FIELD

The disclosure herein generally relates to the field of software, and, more particularly, to systems and methods for auto repairing vulnerable code program fragments of a software.

### BACKGROUND

With the expansion of software industry, software programming has become an integral of multiple applications in multiple industries. However, vulnerability of software code programs in software is an issue of concerns as it may lead to network intrusion and compromise security of the software. Auto correction of the software vulnerability is of considerable interest to enterprises as they try to minimize software maintenance burden. There exist few conventional approaches for auto correction of the software vulnerability that include test driven approaches or Deep Learning (DL) based approaches to automatically patch a vulnerable code.

Test driven approaches require a test suite containing one failing test case along with a fault localization strategy. Auto repair process in the test driven approaches involves generating different patches that pass all testcases of given test suite. Thus, test driven approaches are dependent on the test suite with one failing test case for vulnerability correction. Enterprise applications may have test cases, but they are mostly limited to functional testing and figuring out test cases only for detecting a vulnerability is a challenging task and requires expertise.

A solution for eliminating the need of test suite proposed in test driven approaches is provided by DL based approaches. The DL based approaches generate patches for vulnerable code without requiring test suite. However, they need a comprehensive dataset to train DL model. Moreover, DL based approaches are susceptible to encoding of input test programs. Every DL based approach defines a way to process only relevant parts of programs in a given dataset and accuracy of a patch generation depends on a preprocessing step before generating embeddings for dataset programs. Further, DL based approaches do not generate a unique patch for a vulnerability rather they generate a set of candidate patches. This requires software engineers to manually inspect each one of them to figure out suitable candidate if there exists any.

HU YIKUN ET AL: "Automatically Patching Vulnerabilities of Binary Programs via Code Transfer From Correct Versions",IEEE ACCESS, vol. 7 , pages 28170-28184, XP011715196, DOI: 10.1109/ACCESS.2019.2901951 discloses automatically patching CVE vulnerabilities in binary applications. US 2021/056210 A1 discloses removing vulnerabilities by automatically patching binary applications and corresponding source code.

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising receiving, via an input/output interface, an application in binary form, and a set of predefined vulnerability detection rules as an input; detecting, via a first module executed by one or more hardware processors, a plurality of vulnerable program fragments in the received application in binary form based on the set of predefined vulnerability detection rules; creating, via a second module executed by the one or more hardware processors, a mapping between the application in binary form and a plurality of source code files corresponding to the application in binary form to identify a plurality of vulnerable source code program fragments; and performing, via a third module executed by the one or more hardware processors, an auto repairing process on each of the identified plurality of vulnerable source code program fragments to obtain a plurality of safe source code program fragments, wherein the auto repairing process comprises: extracting, one or more paths representing a functionality aspect of the application in binary form and a plurality of vulnerable program statements for each vulnerable source code program fragment from the plurality of vulnerable source code program fragments in the application in binary form based on the created mapping; applying, a functional ordered auto repair rule from a plurality of functional ordered auto repair rules in accordance with a plurality of predefined criterions to each of the plurality of vulnerable program statements of each path from the one or more paths; computing, an effect of applying the functional ordered auto repair rule on a plurality of non-vulnerable program statements within a first set of procedures from a set of procedures associated with each of the one or more paths, wherein the functional ordered auto repair rule utilizes one or more repair strategies, and wherein one or more inconsistencies are generated in the plurality of non-vulnerable program statements within the first set of procedures from the set of procedures associated with each of the one or more paths when the one or more repair strategies are used; resolving, the one or more inconsistency generated in the plurality of non-vulnerable program statements within the first set of procedures from the set of procedures associated with each of the one or more paths; and iteratively computing, an effect of use of the one or more repair strategies on a second set of the procedures from the set of procedures and resolving the one or more inconsistency generated in the second set of procedures from the set of procedures associated with each of the one or more paths.

In another aspect, a system is provided. The system comprising a memory storing instructions; one or more communication interfaces; and one or more hardware processors coupled to the memory via the one or more communication interfaces, wherein the one or more hardware processors are configured by the instructions to: receive, an application in binary form and a set of predefined vulnerability detection rules as an input; detect, a plurality of vulnerable program fragments in the received application in binary form based on the set of predefined vulnerability detection rules; create, a mapping between the application in binary form and a plurality of source code files corresponding to the application in binary form to identify a plurality of vulnerable source code program fragments; and perform, an auto repairing process on each of the identified plurality of vulnerable source code program fragments to obtain a plurality of safe source code program fragments, wherein the auto repairing process comprises: extracting, one or more paths representing a functionality aspect of the application in binary form and a plurality of vulnerable program statements for each vulnerable source code program fragment from the plurality of vulnerable source code program fragments in the application in binary form based on the created mapping; applying, a functional ordered auto repair rule from a plurality of functional ordered auto repair rules in accordance with a plurality of predefined criterions to each of the plurality of vulnerable program statements of each path from the one or more paths; computing, an effect of applying the functional ordered auto repair rule on a plurality of non-vulnerable program statements within a first set of procedures from a set of procedures associated with each of the one or more paths, wherein the functional ordered auto repair rule utilizes one or more repair strategies, and wherein one or more inconsistencies are generated in the plurality of non-vulnerable program statements within the first set of procedures from the set of procedures associated with each of the one or more paths when the one or more repair strategies are used; resolving, the one or more inconsistency generated in the plurality of non-vulnerable program statements within the first set of procedures from the set of procedures associated with each of the one or more paths; and iteratively computing, an effect of use of the one or more repair strategies on a second set of the procedures from the set of procedures and resolving the one or more inconsistency generated in the second set of procedures from the set of procedures associated with each of the one or more paths.

In yet another aspect, a non-transitory computer readable medium is provided. The non-transitory computer readable medium are configured by instructions for receiving, an application in binary form, and a set of predefined vulnerability detection rules as an input; detecting, a plurality of vulnerable program fragments in the received application in binary form based on the set of predefined vulnerability detection rules; creating, a mapping between the application in binary form and a plurality of source code files corresponding to the application in binary form to identify a plurality of vulnerable source code program fragments; and performing, an auto repairing process on each of the identified plurality of vulnerable source code program fragments to obtain a plurality of safe source code program fragments, wherein the auto repairing process comprises: extracting, one or more paths representing a functionality aspect of the application in binary form and a plurality of vulnerable program statements for each vulnerable source code program fragment from the plurality of vulnerable source code program fragments in the application in binary form based on the created mapping; applying, a functional ordered auto repair rule from a plurality of functional ordered auto repair rules in accordance with a plurality of predefined criterions to each of the plurality of vulnerable program statements of each path from the one or more paths; computing, an effect of applying the functional ordered auto repair rule on a plurality of non-vulnerable program statements within a first set of procedures from a set of procedures associated with each of the one or more paths, wherein the functional ordered auto repair rule utilizes one or more repair strategies, and wherein one or more inconsistencies are generated in the plurality of non-vulnerable program statements within the first set of procedures from the set of procedures associated with each of the one or more paths when the one or more repair strategies are used; resolving, the one or more inconsistency generated in the plurality of non-vulnerable program statements within the first set of procedures from the set of procedures associated with each of the one or more paths; and iteratively computing, an effect of use of the one or more repair strategies on a second set of the procedures from the set of procedures and resolving the one or more inconsistency generated in the second set of procedures from the set of procedures associated with each of the one or more paths.

In accordance with an embodiment of the present disclosure, the functionality aspect is characterized by a functional group attribute and an order attribute.

In accordance with an embodiment of the present disclosure, the plurality of predefined criterions include (i) determining type of each of the plurality of vulnerable program statements (ii) determining a functional ordered auto repair rule from the plurality of functional ordered auto repair rules matching to each of the plurality of vulnerable program statements, and (iii) determining a rule type of the functional ordered auto repair rule from the plurality of functional ordered auto repair rules matching to each of the plurality of vulnerable program statements.

In accordance with an embodiment of the present disclosure, the first set of procedures represents a set of vulnerability located procedures.

In accordance with an embodiment of the present disclosure, the second set of procedures represents a set of non-vulnerability located procedures.

the one or more repair strategies are utilized based on the rule type of the functional ordered auto repair rule from the plurality of functional ordered auto repair rules matching to each of the plurality of vulnerable program statements.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for auto repairing vulnerable code program fragments of a software program, according to some embodiments of the present disclosure.
FIG. 2 is a functional block diagram for auto repairing vulnerable code program fragments of a software, using the system of FIG. 1, according to some embodiments of the present disclosure.
FIG. 3 illustrates an exemplary flow diagram illustrating a method for auto repairing vulnerable code program fragments of a software, using the system of FIG. 1, in accordance with some embodiments of the present disclosure.
FIGS. 4A and 4B depict two sample codes taken from a sample application for key generation and encryption functions for auto repairing vulnerable code program fragments of a software, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Auto correcting an application vulnerability is of considerable interest to enterprises as they try to minimize the software maintenance burden. Few conventional approaches propose solutions to automatically repair buggy programs. All proposed solutions include a well-defined setting which includes a set of test cases with at least one of them failing for a given buggy program. Further, all proposed solutions rely on a fault localization strategy, an approach to find out a root cause for a bug. Once fault is localized then a solution tries to generate a variant of buggy program which may succeed on all test cases. Typically, most conventional approaches attempt to delete or add or modify program statements and a simple deletion strategy may suffice for it. Other conventional approaches are more involved using hybrid approach than others that rely on a simple deletion strategy. However, these few conventional approaches do not produce correct output of testcases rather just assume the test case not failing as success. Further, auto correction of vulnerable software may not necessarily depend on fault localization as faults are encoded in rules given as input. Moreover, auto correction of vulnerable software may need to add or update or delete multiple program statements across methods to generate a new variant and hence, these conventional approaches are not useful.

Recently, deep learning (DL) based approaches were used to automatically repair software vulnerabilities. DL based approaches encode input dataset of programs by generating embeddings and output a repaired program for a given buggy program. However, performance of DL solutions rely heavily on what context is considered while generating embeddings. Richer contexts generate better quality embeddings at expense of huge training time. Many a times, the set of real enterprise applications are not available in an enterprise setting to train a given model. Further, heterogenous nature of enterprise applications makes training and code related challenges more severe. Moreover, DL based approaches generate a set of candidates and not a single program addressing a vulnerability. Hence, a manual intervention from a developer is unavoidable. Finally, some DL based approaches suffer from Out Of Vocabulary (OOV) and code related challenges such as which part of code should be considered and how to process inputs.

The present disclosure addresses unresolved problems of the conventional methods by removing the dependency on test cases through functional ordered rules when applied to application extract functionalities in form of paths. The method and system of the present disclosure generates a unique code fragment avoiding a need for manual verification from a software developer to choose among multiple competing code fragments. The present disclosure does not require any model training and hence does not depend on availability of dataset. A state-of-the-art (e.g., `Tan, Hee Beng Kuan, and Juan Tiang Kow. "An approach for extracting code fragments that implement functionality from source programs." Journal of Software Maintenance and Evolution: Research and Practice 13, no. 1 (2001): 53-75.') discusses an approach to extract code fragments that implement a functionality.

The method of the present disclosure uses slicing to extract fragments along with program statements processing input/output of the software. A slicing based approach proposed in the above-mentioned state-of-the-art may end up collecting program statements that may not belong to particular functionality as backward slices are not precise. This problem is resolved in the present disclosure by using a functionality determination module that uses functional ordered rules to generate order among program statements and subsequently among application procedures to extract a path representing functionality. In context of the present disclosure, the expressions `functional ordered rules', 'rules', "auto repair rules, and `functional ordered auto repair rules' may be interchangeably used throughout the description.

Embodiments of the present disclosure provide system and method for auto repairing of vulnerable code program fragments of a software program application. In the method of the present disclosure, vulnerabilities in an input application are identified and repaired. First, a plurality of vulnerability detection rules are executed against an application in binary form (i.e., input application) and a plurality of vulnerable code fragments are identified. Post identification of the plurality of vulnerable code fragments, a mapping is created from the application in binary form to its source code files. Once mapping is in place, paths capturing different application functionalities are extracted. Subsequently, a plurality of vulnerable (i.e., unsafe) source code program fragments are extracted, and auto correction rules are applied on an entire application functionality. As a result of execution of the auto correction rules, the plurality of vulnerable (i.e., unsafe) source code program fragments are replaced with safe code fragments. Different code replacement strategies are adopted in the present disclosure to correct the plurality of vulnerable (i.e., unsafe) source code program fragments. Many a times, code replacement strategies end up creating inconsistencies in the input application. The repair process is further initiated to address inconsistencies. More Specifically, the present disclosure describes the following:
1. A functionality extraction approach to extract functionalities using functional ordered preserving rules to eliminate dependency on test cases.
2. A multi pass auto repair process correcting inconsistencies arising due to changes made to a software while applying auto repair rules.
3. A generation of unique functionality specific repaired program.

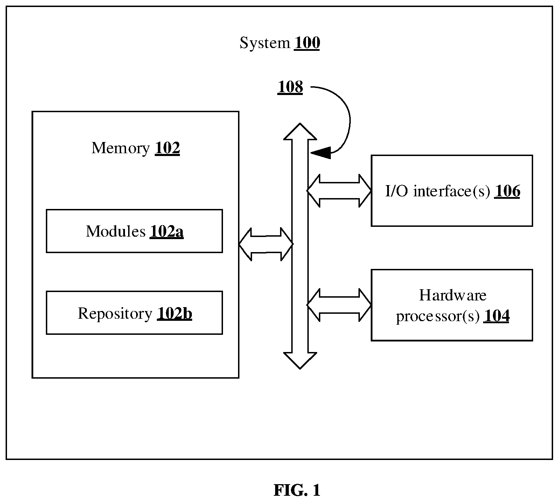

Referring now to the drawings, and more particularly to FIGS. 1 through 4B, where similar reference characters denote corresponding features consistently throughout the figures, there are shown preferred embodiments and these embodiments are described in the context of the following exemplary system and/or method.

FIG. 1 illustrates an exemplary system for auto repairing vulnerable code program fragments of a software according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and `hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1) such as a vulnerability detection module, a mapping creation module, functionality determination module, slicing module, intra procedure correction module, and inter procedure correction module. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

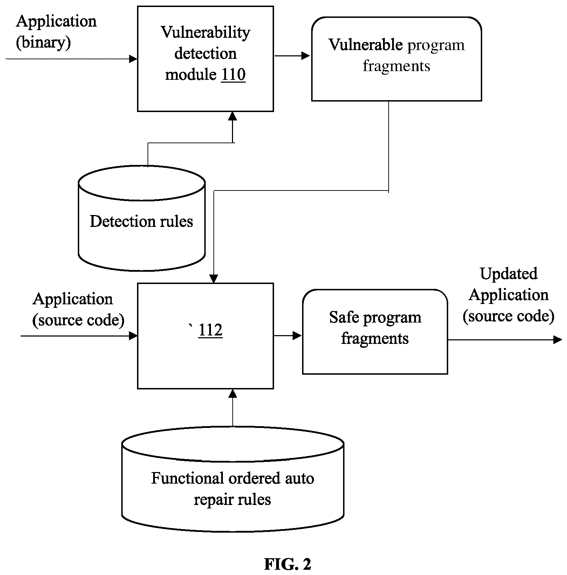

FIG. 2, with reference to FIG. 1, is a functional block diagram for auto repairing vulnerable code program fragments of a software, using the system of FIG. 1, according to some embodiments of the present disclosure.

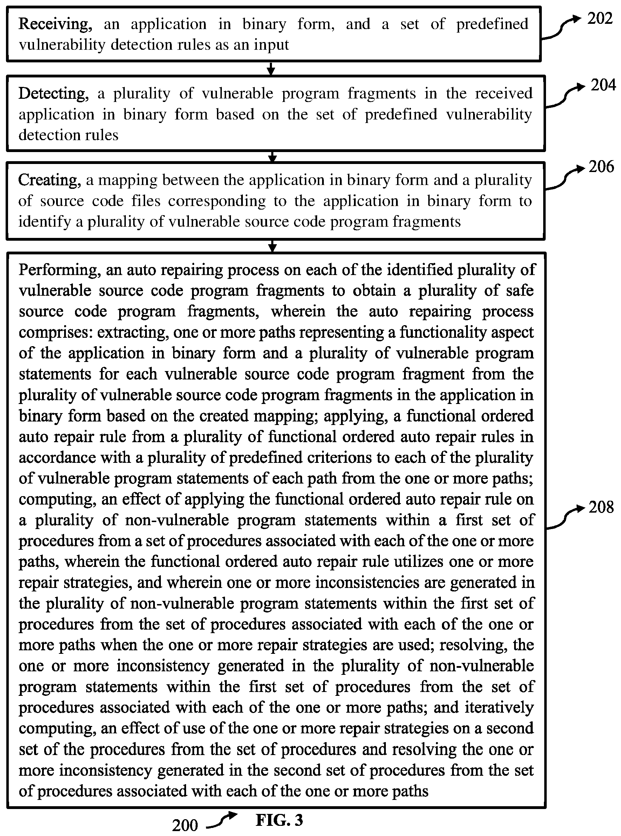

FIG. 3, with reference to FIGS. 1 and 2, illustrates an exemplary flow diagram illustrating a method for auto repairing vulnerable code program fragments of a software, using the system of FIG. 1, in accordance with some embodiments of the present disclosure.

Referring to FIG. 3, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the block diagram of FIG. 2, the flow diagram as depicted in FIG. 3, , and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, an input/output interface is configured to receive an application in binary form and a set of predefined vulnerability detection rules as an input.

Further, at step 204 of the present disclosure, the one or more hardware processors 104 are configured to detect, via a first module executed by one or more hardware processors, a plurality of vulnerable program fragments in the received application in binary form based on the set of predefined vulnerability detection rules. It is shown in FIG. 2 that the application in binary form and the set of vulnerability detection rules as received as input at first module. The first module is referred as vulnerability detection module. The vulnerability detection module 110 of the system 100 detects a vulnerability in the application in binary form. The vulnerability detection module 110 applies the set of vulnerability detection rules against the application in binary form and detects vulnerabilities. To detect vulnerabilities, the vulnerability detection module 110 uses human crafted vulnerability detection rules. Mostly, a vulnerability detection rule represents vulnerable method signature. The vulnerability detection module 110 matches binary content of the application in binary form against a given vulnerability detection rule to detect a vulnerability. If a match is found, then corresponding binary fragment is marked as vulnerable.

A vulnerability detection rule capturing unsafe cryptographic API (method signature) is further better understood by way of following pseudocode provided as example:

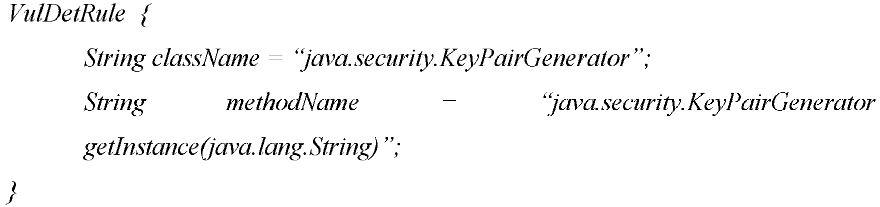

Typically, the vulnerable program fragment (alternatively referred as vulnerable binary code fragment) is a program statement ps in a procedure p.

At step 206 of the present disclosure, the one or more hardware processors 104 are configured to create, via a second module executed by the one or more hardware processors, a mapping between the application in binary form and a plurality of source code files corresponding to the application in binary form to identify a plurality of vulnerable source code program fragments. The second module is referred as a mapping creation module (also referred as Binary to Source mapping module). The present disclosure repair vulnerabilities automatically. However, the auto repair process in the binary form of application is impossible as there are many transformations done by a compiler while converting source code of an application into an optimal binary code. To mitigate side effects of these transformations, the auto repair process should work on the source code of the application. Moreover, application developers only understand source code. Given all these constraints, a mapping from the application in binary form to its corresponding source files is created.

In an embodiment, at step 208 of the present disclosure, the one or more hardware processors 104 are configured to perform, via a third module executed by the one or more hardware processors, an auto repairing process on each of the identified plurality of vulnerable source code program fragments to obtain a plurality of safe source code program fragments. The module is referred as an auto repair module. In an embodiment, the auto repairing process comprises extracting, one or more paths representing a functionality aspect of the application in binary form and a plurality of vulnerable program statements for each vulnerable source code program fragment from the plurality of vulnerable source code program fragments in the application in binary form based on the created mapping. In an embodiment, the functionality aspect is characterized by a functional group attribute and an order attribute. Further, a functional ordered auto repair rule from a plurality of functional ordered auto repair rules is applied to each of the plurality of vulnerable program statements of each path from the one or more paths applied in accordance with a plurality of predefined criterions.

In another embodiment, the plurality of predefined criterions include (i) determining type of each of the plurality of vulnerable program statements (ii) determining a functional ordered rule from the plurality of functional ordered auto repair rules matching to each of the plurality of vulnerable program statements, and (iii) determining a rule type of the functional ordered rule from the plurality of functional ordered auto repair rules matching to each of the plurality of vulnerable program statements.

Furthermore, an effect of applying the functional ordered auto repair rule on a plurality of non-vulnerable program statements is computed within a first set of procedures from a set of procedures associated with each of the one or more paths. The first set of procedures represents a set of vulnerability located procedures. Here, the functional ordered auto repair rule utilizes one or more repair strategies. The one or more repair strategies are utilized based on the rule type of the functional ordered auto repair rule ordered rule from the plurality of functional ordered auto repair rules matching to each of the plurality of vulnerable program statements.

In yet another embodiment, one or more inconsistencies are generated in the plurality of non-vulnerable program statements within the first set of procedures from the set of procedures associated with each of the one or more paths when the one or more repair strategies are used. The one or more inconsistency generated in the plurality of non-vulnerable program statements within the first set of procedures from the set of procedures associated with each of the one or more paths are resolved. An effect of use of the one or more repair strategies on a second set of the procedures from the set of procedures and resolving the one or more inconsistency generated in the second set of procedures from the set of procedures associated with each of the one or more paths is iteratively computed. The second set of procedures represents a set of non-vulnerability located procedures.

In other words, the auto repair module 112 employs a multi phases approach to automatically repair the plurality of vulnerable source code program fragments and replaces with safe source code program fragments. As shown in FIG. 2, the auto repair module1 12 operates on source code of the application in binary form. It uses the mapping generated by the mapping creation module from the vulnerable source code program fragments to its corresponding source code program fragments. The auto repairing module operates on a path capturing application functionality as computed by a functionality determination module. The path contains vulnerable source code program fragments to be repaired. A key benefit of operating over the path is to provide a direction and a termination criterion for auto repair process.

The step 208 is better understood by way of the following description provided as exemplary explanation.

The functionality determination module extracts a functionality from the application in binary form using a plurality of functional ordered auto repair rules before executing an auto repair strategy. The functionality is extracted in form of a path that starts with a program statement and ends with a program statement. The path might run across multiple procedures. A functional ordered auto repair rule comprises two attributes among a plurality of attributes that help extracts functionality. First attribute *'functionalgroup'* denotes the name of functionality to which functional ordered auto repair rule belongs. The name attribute categorizes all functional ordered auto repair rules into different categories (also referred as functionality aspect). Second attribute is order, the value of which determines order of execution of a program statement in a path. A functional ordered auto repair rule for remove strategy is further better understood by way of following pseudocode provided as example: 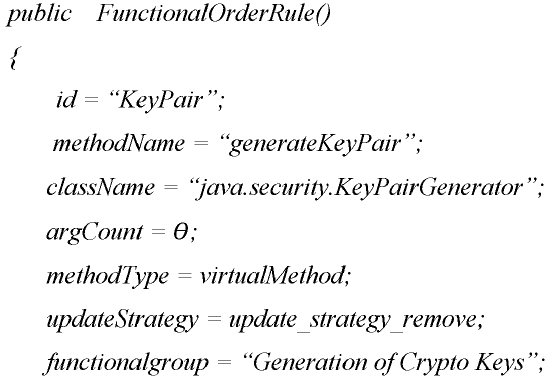 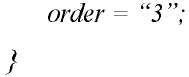 It is shown in the above pseudocode, the functional ordered auto repair rule for remove strategy has functionalgroup and order attributes. Former attribute describes that the rule belongs to a functionality of program statements capturing cryptographic key pair generation and later attribute describes an order in which a program statement that invokes the virtual method generateKeyPair will appear in an application path.

In an embodiment, all functional ordered auto repair rules belonging to a particular functional group are extracted. The rules are sorted based on value of order attribute. For every procedure and its program statements, the functional ordered auto repair rules are executed to determine their applicability. If a functional ordered auto repair rule is applicable to a program statement, then, the program statement is annotated with a value of order attribute. The procedure to which the program statement belongs to is also annotated with the value of order attribute and the value of functionalgroup attribute that describes the functionality. Further, all annotated procedures are categorized into different functional groups based on values of functionalgroup attribute. A procedure may belong to more than one functional group category. For each functional group category, the methods are arranged in a call order based on the values of order attribute. For example, if a method *Y* has program statements with values of order < 2 > < 3 > < 4 > and a method *X* has a program statement with value of order attribute < 1 > then, in a call order *X* precedes *Y* irrespective of how they are going to be called during the execution of application. Once all methods belonging to a functional group category are placed in call order, a path is generated by combining all annotated nodes as per the call order. The path captures the entire functionality by expanding it to include all other program statements which are not in the path as per the plurality of functional ordered rules but they are either predecessors or successors of program statements occurring between start and end program statements.

In an embodiment, a multi phases approach is used by the auto repair module 112 to automatically repair the plurality of vulnerable source code program fragments and replaces with safe source code program fragments. The first phase of the auto repair module 112 performs intra procedure analysis. It uses the plurality of functional order auto repair rules to repair the plurality of vulnerable source code program fragments and update them with the plurality safe source code program fragments.

The steps executed by the first phase of auto repair module 112 are as follows:
For each vulnerable program statements *ps* from the plurality of vulnerable program statements for each vulnerable source code program fragment from the plurality of vulnerable source code program fragments in procedure *q,* perform: 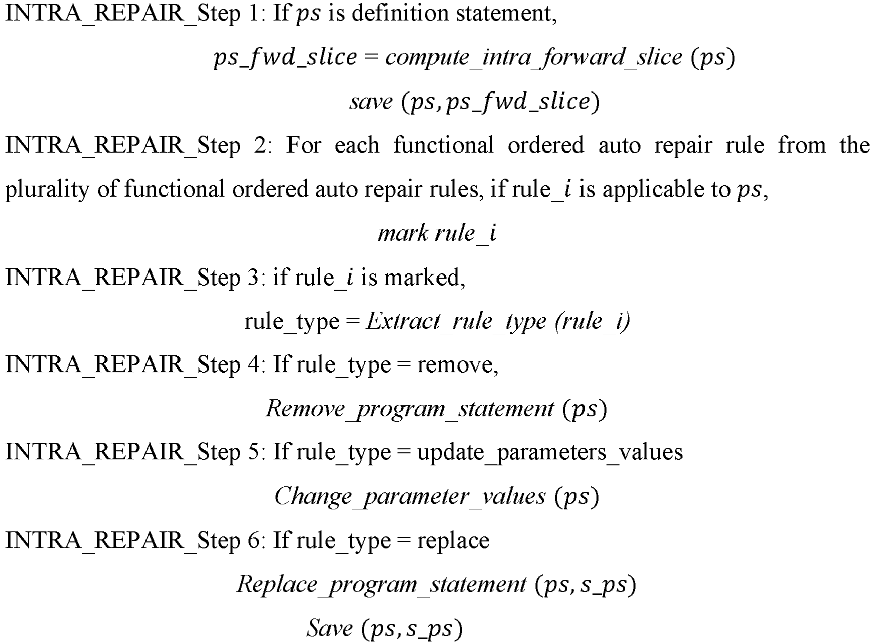 In an embodiment, INTRA_REPAIR Steps 1-6 are executed on every procedure containing the plurality of vulnerable program statements. First step checks the type of the vulnerable program statement *ps.* If it is a definition statement then, a forward intra procedure slice is computed for it and stored in program statement repository. In the second step, all of the plurality of functional ordered auto repair rules are executed against the program statement *ps* and an applicable rule (rule_*i*) is marked. Third step extracts the type of the matched rule (rule_*i*). INTRA_REPAIR Steps 4-6 execute the one or more repair strategies based on the rule type of the matched rule (rule_*i*). For example, if the type of the matched rule (rule_*i*) is remove then, the vulnerable program statement ps is removed from source code. If the type of the matched rule (rule_*i*) is update parameter values then, values of parameters which are passed to the method of ps are updated with parameters values specified in the rule_*i*. If the type of the matched rule (rule_*i*) is replace then, the vulnerable program statement *ps* is replaced with a safe program statement *s_ps* and the pair is saved in program statement repository.

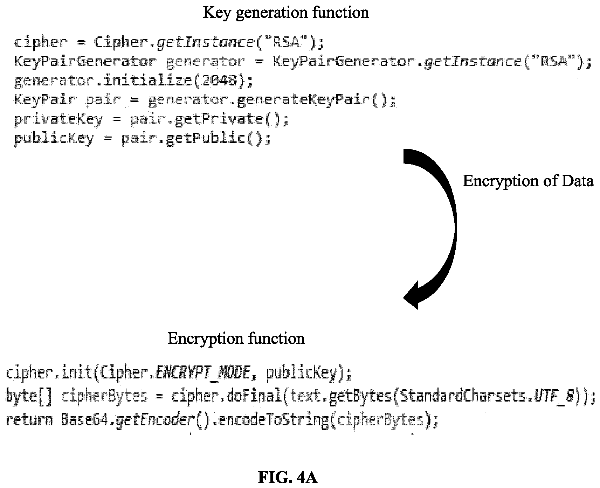

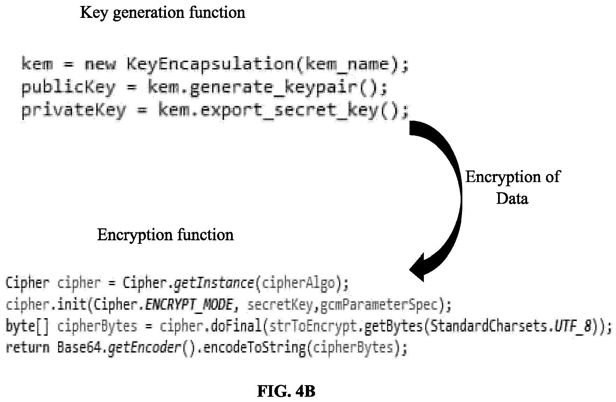

FIGS. 4A and 4B depict two sample codes taken from a sample application for key generation and encryption functions for auto repairing vulnerable code program fragments of a software, in accordance with some embodiments of the present disclosure. FIG. 4A depict a sample code taken from a sample application for key generation and encryption functions which is vulnerable to a quantum attack (i.e., a quantum computer can break the encryption scheme). FIG. 4B depict a sample code taken from a sample application for key generation and encryption functions which is a quantum safe code. Key generation and encryption functions are parts of different functions in the application in binary form. Key generation functions in both snippets shown in FIGS. 4A and 4B generate two keys: private key and public key. In the encryption functions, the generated keys are utilized to encrypt input data. To convert the key generation function of FIG. 4A (i.e., quantum unsafe code) into the key generation function of FIG. 4B (i.e., quantum safe code), INTRA_REPAIR Steps 1-6 are applied with the types of the plurality of functional ordered auto repair rules being executed in the following order: replace, remove, remove, remove, replace, and replace. These are referred as the one or more repair strategies. Similarly, INTRA _REPAIR Steps 1-6 repair the encryption function.

However, the INTRA _REPAIR Steps 1-6 executed for procedure *q* may lead to errors in source code of the application in binary form. For example, if type of the functional ordered auto repair rule is 'replace' then, replacing existing vulnerable program statement may lead to undefined variable errors in other program statements in the procedure *q.* To correct such errors, the auto repair module 112 makes use of slice computed in the INTRA _REPAIR Step 1. Thus, the auto repair module 112 executes the following error correction steps: 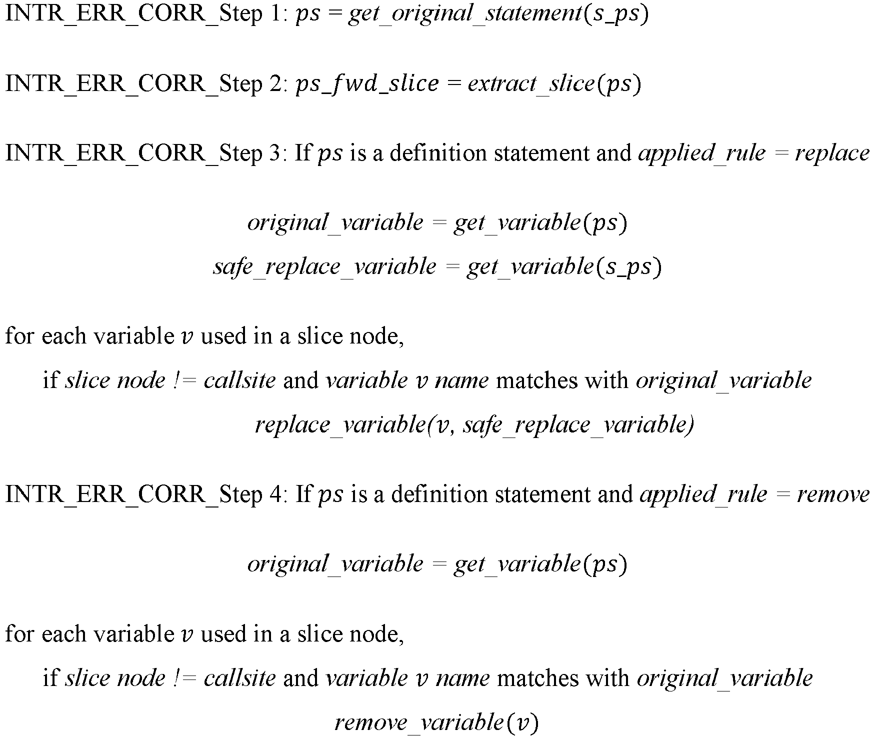 In an embodiment, INTR_ERR_CORR Steps 1-4 address the one or more inconsistency generated within a procedure (also referred as the set of vulnerability located procedures) in variable names which arise due to one or more repair strategies adopted in Steps 1-6. However, this approach does not address interprocedural syntax and semantics inconsistencies. For example, INTR_ERR_CORR Step 1 checks the type of program statement *ps* and applied rule and executes subsequent steps only if applied rule type is 'replace'. However, there may be another scenario where the applied rule type is 'remove'. In that scenario, in all nodes of slice where the variable being defined by *ps* is used will be removed as well. If one of slice nodes happen to be a callsite (a method invocation statement) which accepts the variable defined by *ps* as one of its arguments then, the corresponding argument is removed as well. This causes changes in declaration and definition of a procedure corresponding to that callsite. To handle such cases, intra procedure repair is not sufficient and an inter procedure analysis of auto repair strategy should be devised. INTR_ERR_CORR Steps 3 and 4 are updated to handle scenarios wherein a slice contains callsite node (a method invocation statement). Both steps make additional check of callsite node on a path computed by the functionality determination module. The updated INTR ERR CORR Steps 3 and 4 are provided below:
INTR ERR CORR SLICE Step 3: 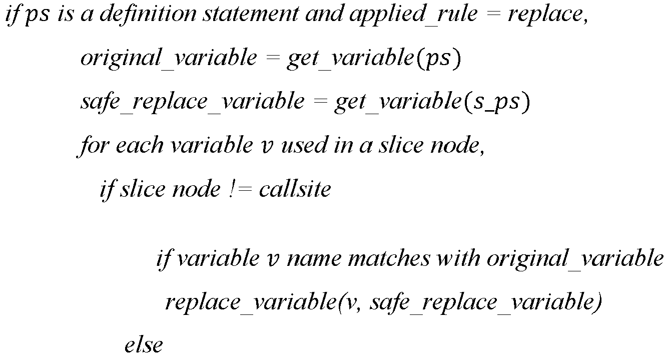 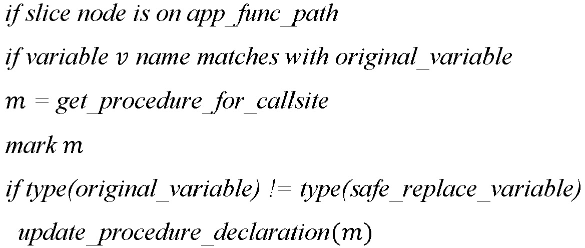
INTR_ERR_CORR_SLICE Step 4: 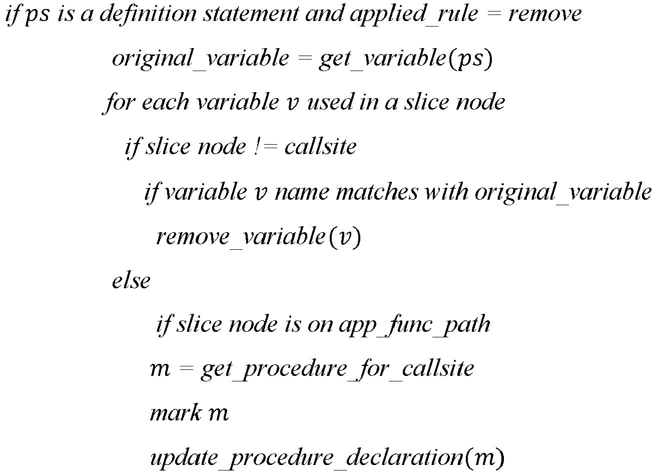 the updated INTR_ERR_CORR_SLICE Steps 3 and 4 handle scenarios when a slice contains callsite. If the type of applied rule is 'replace' and slice node is `callsite' then, step 3 fetches procedure m for that callsite and update its declaration. Typically, changes made to method declaration include changing name of argument corresponding to original definition of program statement *ps* in callsite and changing type of variable in method declaration *m.* Procedure *m* is marked as well for subsequent processing. Step 4 handles the case when the type of applied rule is remove. Step 4 fetches the procedure *m* corresponding to callsite and updates its declaration. Typically, changes made to method declaration include removing actual argument from the callsite corresponding to original variable defined by program statement *ps* and formal parameter from method declaration corresponding to actual argument.

In an embodiment, the updated INTR_ERR_ CORR_SLICE Steps 3 and 4 mark procedures corresponding to callsites and update method declarations as well. These changes give rise to syntax and semantic inconsistencies in updated methods. The following steps address newly introduced inconsistencies in other procedures (also referred as the set of non-vulnerability located procedures) to complete the auto repair process:
INTER ERR CORR Step 1: 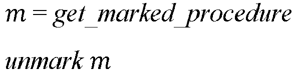
INTER_ERR_CORR Step 2: 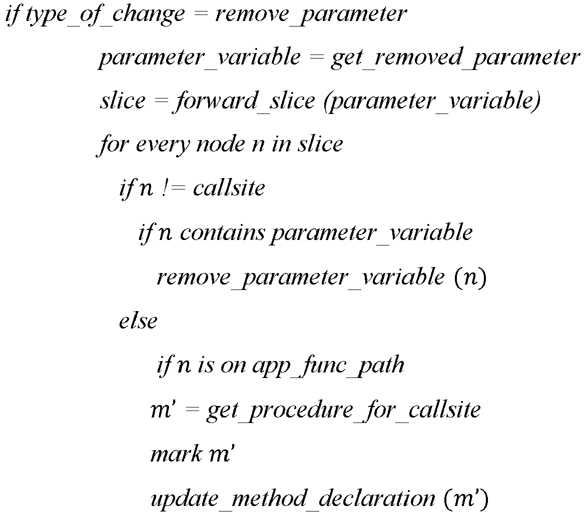
INTER ERR CORR Step 3: 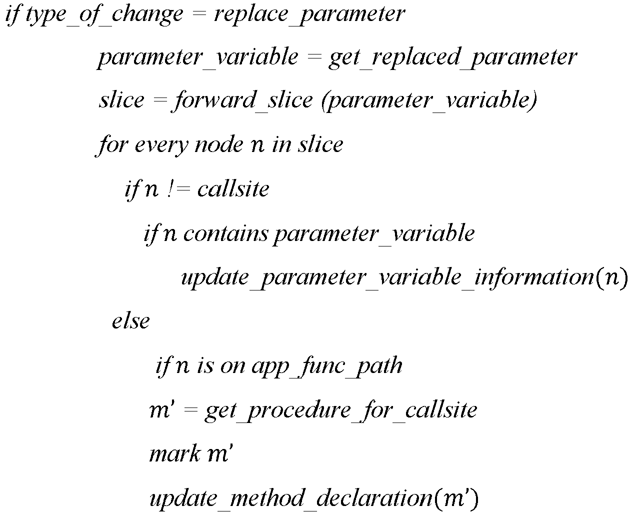
INTER_ERR_CORR Steps 2 and 3 handle two different scenarios. If update done to a method declaration was to remove a method parameter, then, step 2 accordingly removes that variable from all program statements of procedure definitions including callsite. All affected program statements are computed using intra procedure slice. If update done to a method declaration was to update a method parameter, then, step 3 updates the type of variable in slice nodes where it is being explicitly checked or used. It is noted that INTR_ERR_CORR_SLICE steps 3 and 4 and inter-procedure INTER_ERR_CORR steps work in iterative fashion to propagate changes throughout all affected procedures of input application. Moreover, they make additional check of callsite node which is on a path computed by the functionality determination module.

In an embodiment, the key generation function as shown in FIG. 4A is auto repaired and converted into quantum safe form as shown in FIG. 4B, and its impact on the encryption function as shown in FIG. 4B should be handled as well. Types of objects which are created for public and private keys are different and hence the declaration of variables is auto repaired. Moreover, the parameters passed to the encryption function as shown in FIG. 4B are auto repaired as per new types of private and public keys. Inter procedural auto repair steps INTR_ERR_CORR_SLICE steps 3 and 4 and INTER_ERR_CORR steps 2 and 3 handle this scenario.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising:
receiving (202), via an input/output interface, an application in binary form, and a set of predefined vulnerability detection rules as an input;
detecting (204), via a first module executed by one or more hardware processors, a plurality of vulnerable program fragments in the received application in binary form based on the set of predefined vulnerability detection rules;
creating (206), via a second module executed by the one or more hardware processors, a mapping between the application in binary form and a plurality of source code files corresponding to the application in binary form to identify a plurality of vulnerable source code program fragments; and
performing (208), via a third module executed by the one or more hardware processors, an auto repairing process on each of the identified plurality of vulnerable source code program fragments to obtain a plurality of safe source code program fragments, wherein the auto repairing process comprises:
extracting, one or more paths representing a functionality aspect of the application in binary form and a plurality of vulnerable program statements for each vulnerable source code program fragment from the plurality of vulnerable source code program fragments in the application in binary form based on the created mapping;
applying, a functional ordered auto repair rule from a plurality of functional ordered auto repair rules in accordance with a plurality of predefined criterions to each of the plurality of vulnerable program statements of each path from the one or more paths;
computing, an effect of applying the functional ordered auto repair rule on a plurality of non-vulnerable program statements within a first set of procedures from a set of procedures associated with each of the one or more paths, wherein the functional ordered auto repair rule utilizes one or more repair strategies, and wherein one or more inconsistencies are generated in the plurality of non-vulnerable program statements within the first set of procedures from the set of procedures associated with each of the one or more paths when the one or more repair strategies are used;
resolving, the one or more inconsistency generated in the plurality of non-vulnerable program statements within the first set of procedures from the set of procedures associated with each of the one or more paths; and
iteratively computing, an effect of use of the one or more repair strategies on a second set of the procedures from the set of procedures and resolving the one or more inconsistency generated in the second set of procedures from the set of procedures associated with each of the one or more paths.

2. The processor implemented method (200) as claimed in claim 1, wherein the functionality aspect is **characterized by** a functional group attribute and an order attribute.

3. The processor implemented method (200) as claimed in claim 1, wherein the plurality of predefined criterions include (i) determining type of each of the plurality of vulnerable program statements (ii) determining a functional ordered auto repair rule from the plurality of functional ordered auto repair rules matching to each of the plurality of vulnerable program statements, and (iii) determining a rule type of the functional ordered auto repair rule from the plurality of functional ordered auto repair rules matching to each of the plurality of vulnerable program statements.

4. The processor implemented method (200) as claimed in claim 1, wherein the first set of procedures represents a set of vulnerability located procedures.

5. The processor implemented method (200) as claimed in claim 1, wherein the second set of procedures represents a set of non-vulnerability located procedures.

6. The processor implemented method (200) as claimed in claim 1, wherein the one or more repair strategies are utilized based on the rule type of the functional ordered auto repair rule from the plurality of functional ordered auto repair rules matching to each of the plurality of vulnerable program statements.

7. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive, an application in binary form and a set of predefined vulnerability detection rules as an input;
detect, a plurality of vulnerable program fragments in the received application in binary form based on the set of predefined vulnerability detection rules;
create, a mapping between the application in binary form and a plurality of source code files corresponding to the application in binary form to identify a plurality of vulnerable source code program fragments; and
perform, an auto repairing process on each of the identified plurality of vulnerable source code program fragments to obtain a plurality of safe source code program fragments, wherein the auto repairing process comprises:
extracting, one or more paths representing a functionality aspect of the application in binary form and a plurality of vulnerable program statements for each vulnerable source code program fragment from the plurality of vulnerable source code program fragments in the application in binary form based on the created mapping;
applying, a functional ordered auto repair rule from a plurality of functional ordered auto repair rules in accordance with a plurality of predefined criterions to each of the plurality of vulnerable program statements of each path from the one or more paths;
computing, an effect of applying the functional ordered auto repair rule on a plurality of non-vulnerable program statements within a first set of procedures from a set of procedures associated with each of the one or more paths, wherein the functional ordered auto repair rule utilizes one or more repair strategies, and wherein one or more inconsistencies are generated in the plurality of non-vulnerable program statements within the first set of procedures from the set of procedures associated with each of the one or more paths when the one or more repair strategies are used;
resolving, the one or more inconsistency generated in the plurality of non-vulnerable program statements within the first set of procedures from the set of procedures associated with each of the one or more paths; and
iteratively computing, an effect of use of the one or more repair strategies on a second set of the procedures from the set of procedures and resolving the one or more inconsistency generated in the second set of procedures from the set of procedures associated with each of the one or more paths.

8. The system (100) as claimed in claim 7, wherein the functionality aspect is **characterized by** a functional group attribute and an order attribute.

9. The system (100) as claimed in claim 7, wherein the plurality of predefined criterions include (i) determining type of each of the plurality of vulnerable program statements (ii) determining a functional ordered auto repair rule from the plurality of functional ordered auto repair rules matching to each of the plurality of vulnerable program statements, and (iii) determining a rule type of the functional ordered auto repair rule from the plurality of functional ordered auto repair rules matching to each of the plurality of vulnerable program statements.

10. The system (100) as claimed in claim 7, wherein the first set of procedures represents a set of vulnerability located procedures.

11. The system (100) as claimed in claim 7, wherein the second set of procedures represents a set of non-vulnerability located procedures.

12. The system (100) as claimed in claim 7, wherein the one or more repair strategies are utilized based on the rule type of the functional ordered auto repair rule from the plurality of functional ordered auto repair rules matching to each of the plurality of vulnerable program statements.

13. One or more non-transitory machine-readable information storage mediums comprising one or more instructions which when executed by one or more hardware processors cause:
receiving an application in binary form, and a set of predefined vulnerability detection rules as an input;
detecting a plurality of vulnerable program fragments in the received application in binary form based on the set of predefined vulnerability detection rules;
creating a mapping between the application in binary form and a plurality of source code files corresponding to the application in binary form to identify a plurality of vulnerable source code program fragments; and
performing an auto repairing process on each of the identified plurality of vulnerable source code program fragments to obtain a plurality of safe source code program fragments, wherein the auto repairing process comprises:
extracting, one or more paths representing a functionality aspect of the application in binary form and a plurality of vulnerable program statements for each vulnerable source code program fragment from the plurality of vulnerable source code program fragments in the application in binary form based on the created mapping;
applying, a functional ordered auto repair rule from a plurality of functional ordered auto repair rules in accordance with a plurality of predefined criterions to each of the plurality of vulnerable program statements of each path from the one or more paths;
computing, an effect of applying the functional ordered auto repair rule on a plurality of non-vulnerable program statements within a first set of procedures from a set of procedures associated with each of the one or more paths, wherein the functional ordered auto repair rule utilizes one or more repair strategies, and wherein one or more inconsistencies are generated in the plurality of non-vulnerable program statements within the first set of procedures from the set of procedures associated with each of the one or more paths when the one or more repair strategies are used;
resolving, the one or more inconsistency generated in the plurality of non-vulnerable program statements within the first set of procedures from the set of procedures associated with each of the one or more paths; and
iteratively computing, an effect of use of the one or more repair strategies on a second set of the procedures from the set of procedures and resolving the one or more inconsistency generated in the second set of procedures from the set of procedures associated with each of the one or more paths.

14. The one or more non-transitory machine readable information storage mediums of claim 13, wherein the functionality aspect is **characterized by** a functional group attribute and an order attribute.

15. The one or more non-transitory machine readable information storage mediums of claim 13, wherein the plurality of predefined criterions include (i) determining type of each of the plurality of vulnerable program statements (ii) determining a functional ordered auto repair rule from the plurality of functional ordered auto repair rules matching to each of the plurality of vulnerable program statements, and (iii) determining a rule type of the functional ordered auto repair rule from the plurality of functional ordered auto repair rules matching to each of the plurality of vulnerable program statements.

## Patentansprüche

1. Prozessorimplementiertes Verfahren (200), das Folgendes umfasst:
Empfangen (202), über eine Eingabe-/Ausgabeschnittstelle, einer Anwendung in binärer Form und eines Satzes von vordefinierten Schwachstellenerkennungsregeln als eine Eingabe;
Erkennen (204), über ein erstes Modul, das durch einen oder mehrere Hardwareprozessoren ausgeführt wird, einer Mehrzahl von anfälligen Programmfragmenten in der empfangenen Anwendung in binärer Form basierend auf dem Satz von vordefinierten Schwachstellenerkennungsregeln;
Erstellen (206), über ein zweites Modul, das durch den einen oder die mehreren Hardwareprozessoren ausgeführt wird, einer Zuordnung zwischen der Anwendung in binärer Form und einer Mehrzahl von Quellcodedateien, die der Anwendung in binärer Form entsprechen, um eine Mehrzahl von anfälligen Quellcodeprogrammfragmenten zu identifizieren; und
Durchführen (208), über ein drittes Modul, das durch den einen oder die mehreren Hardwareprozessoren ausgeführt wird, eines Autoreparaturprozesses an jedem der identifizierten Mehrzahl von anfälligen Quellcodeprogrammfragmenten, um eine Mehrzahl von sicheren Quellcodeprogrammfragmenten zu erhalten, wobei der Autoreparaturprozess Folgendes umfasst:
Extrahieren, basierend auf der erstellten Zuordnung, eines oder mehrerer Pfade, die einen Funktionalitätsaspekt der Anwendung in binärer Form darstellen, und einer Mehrzahl von anfälligen Programmanweisungen für jedes anfällige Quellcodeprogrammfragment aus der Mehrzahl von anfälligen Quellcodeprogrammfragmenten in der Anwendung in binärer Form;
Anwenden, gemäß einer Mehrzahl von vordefinierten Kriterien, einer funktional geordneten Autoreparaturregel aus einer Mehrzahl von funktional geordneten Autoreparaturregeln auf jede der Mehrzahl von anfälligen Programmanweisungen jedes Pfads aus dem einen oder den mehreren Pfaden;
Berechnen eines Effekts des Anwendens der funktional geordneten Autoreparaturregel auf eine Mehrzahl von nicht anfälligen Programmanweisungen innerhalb eines ersten Satzes von Prozeduren aus einem Satz von Prozeduren, die jedem des einen oder der mehreren Pfade zugeordnet sind, wobei die funktional geordnete Autoreparaturregel eine oder mehrere Reparaturstrategien verwendet, und wobei eine oder mehrere Inkonsistenzen in der Mehrzahl von nicht anfälligen Programmanweisungen innerhalb des ersten Satzes von Prozeduren aus dem Satz von Prozeduren erzeugt werden, die jedem des einen oder der mehreren Pfade zugeordnet sind, wenn die eine oder die mehreren Reparaturstrategien verwendet werden;
Auflösen der einen oder der mehreren Inkonsistenzen, die in der Mehrzahl von nicht anfälligen Programmanweisungen innerhalb des ersten Satzes von Prozeduren aus dem Satz von Prozeduren erzeugt werden, die jedem des einen oder der mehreren Pfade zugeordnet sind; und
iteratives Berechnen eines Effekts der Verwendung der einen oder der mehreren Reparaturstrategien auf einen zweiten Satz der Prozeduren aus dem Satz von Prozeduren und Auflösen der einen oder der mehreren Inkonsistenzen, die in dem zweiten Satz von Prozeduren aus dem Satz von Prozeduren erzeugt werden, die jedem des einen oder der mehreren Pfade zugeordnet sind.

2. Prozessorimplementiertes Verfahren (200) nach Anspruch 1, wobei der Funktionalitätsaspekt durch ein Funktionsgruppenattribut und ein Reihenfolgeattribut gekennzeichnet ist.

3. Prozessorimplementiertes Verfahren (200) nach Anspruch 1, wobei die Mehrzahl von vordefinierten Kriterien Folgendes beinhaltet: (i) Bestimmen des Typs jeder der Mehrzahl von anfälligen Programmanweisungen, (ii) Bestimmen einer funktional geordneten Autoreparaturregel aus der Mehrzahl von funktional geordneten Autoreparaturregeln, die mit jeder der Mehrzahl von anfälligen Programmanweisungen übereinstimmen, und (iii) Bestimmen eines Regeltyps der funktional geordneten Autoreparaturregel aus der Mehrzahl von funktional geordneten Autoreparaturregeln, die mit jeder der Mehrzahl von anfälligen Programmanweisungen übereinstimmen.

4. Prozessorimplementiertes Verfahren (200) nach Anspruch 1, wobei der erste Satz von Prozeduren einen Satz von schwachstellenlokalisierten Prozeduren repräsentiert.

5. Prozessorimplementiertes Verfahren (200) nach Anspruch 1, wobei der zweite Satz von Prozeduren einen Satz von nicht schwachstellenlokalisierten Prozeduren repräsentiert.

6. Prozessorimplementiertes Verfahren (200) nach Anspruch 1, wobei die eine oder die mehreren Reparaturstrategien basierend auf dem Regeltyp der funktional geordneten Autoreparaturregel aus der Mehrzahl von funktional geordneten Autoreparaturregeln verwendet werden, die mit j eder der Mehrzahl von anfälligen Programmanweisungen übereinstimmen.

7. System (100), das Folgendes umfasst:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Empfangen einer Anwendung in binärer Form und eines Satzes von vordefinierten Schwachstellenerkennungsregeln als eine Eingabe;
Erkennen einer Mehrzahl von anfälligen Programmfragmenten in der empfangenen Anwendung in binärer Form basierend auf dem Satz von vordefinierten Schwachstellenerkennungsregeln;
Erstellen einer Zuordnung zwischen der Anwendung in binärer Form und einer Mehrzahl von Quellcodedateien, die der Anwendung in binärer Form entsprechen, um eine Mehrzahl von anfälligen Quellcodeprogrammfragmenten zu identifizieren; und
Durchführen eines Autoreparaturprozesses an jedem der identifizierten Mehrzahl von anfälligen Quellcodeprogrammfragmenten, um eine Mehrzahl von sicheren Quellcodeprogrammfragmenten zu erhalten, wobei der Autoreparaturprozess Folgendes umfasst:
Extrahieren, basierend auf der erstellten Zuordnung, eines oder mehrerer Pfade, die einen Funktionalitätsaspekt der Anwendung in binärer Form darstellen, und einer Mehrzahl von anfälligen Programmanweisungen für jedes anfällige Quellcodeprogrammfragment aus der Mehrzahl von anfälligen Quellcodeprogrammfragmenten in der Anwendung in binärer Form;
Anwenden, gemäß einer Mehrzahl von vordefinierten Kriterien, einer funktional geordneten Autoreparaturregel aus einer Mehrzahl von funktional geordneten Autoreparaturregeln auf jede der Mehrzahl von anfälligen Programmanweisungen jedes Pfads aus dem einen oder den mehreren Pfaden;
Berechnen eines Effekts des Anwendens der funktional geordneten Autoreparaturregel auf eine Mehrzahl von nicht anfälligen Programmanweisungen innerhalb eines ersten Satzes von Prozeduren aus einem Satz von Prozeduren, die jedem des einen oder der mehreren Pfade zugeordnet sind, wobei die funktional geordnete Autoreparaturregel eine oder mehrere Reparaturstrategien verwendet, und wobei eine oder mehrere Inkonsistenzen in der Mehrzahl von nicht anfälligen Programmanweisungen innerhalb des ersten Satzes von Prozeduren aus dem Satz von Prozeduren erzeugt werden, die jedem des einen oder der mehreren Pfade zugeordnet sind, wenn die eine oder die mehreren Reparaturstrategien verwendet werden;
Auflösen der einen oder der mehreren Inkonsistenzen, die in der Mehrzahl von nicht anfälligen Programmanweisungen innerhalb des ersten Satzes von Prozeduren aus dem Satz von Prozeduren erzeugt werden, die jedem des einen oder der mehreren Pfade zugeordnet sind; und
iteratives Berechnen eines Effekts der Verwendung der einen oder der mehreren Reparaturstrategien auf einen zweiten Satz der Prozeduren aus dem Satz von Prozeduren und Auflösen der einen oder der mehreren Inkonsistenzen, die in dem zweiten Satz von Prozeduren aus dem Satz von Prozeduren erzeugt werden, die jedem des einen oder der mehreren Pfade zugeordnet sind.

8. System (100) nach Anspruch 7, wobei der Funktionalitätsaspekt durch ein Funktionsgruppenattribut und ein Reihenfolgeattribut gekennzeichnet ist.

9. System (100) nach Anspruch 7, wobei die Mehrzahl von vordefinierten Kriterien Folgendes beinhaltet: (i) Bestimmen des Typs jeder der Mehrzahl von anfälligen Programmanweisungen, (ii) Bestimmen einer funktional geordneten Autoreparaturregel aus der Mehrzahl von funktional geordneten Autoreparaturregeln, die mit jeder der Mehrzahl von anfälligen Programmanweisungen übereinstimmen, und (iii) Bestimmen eines Regeltyps der funktional geordneten Autoreparaturregel aus der Mehrzahl von funktional geordneten Autoreparaturregeln, die mit jeder der Mehrzahl von anfälligen Programmanweisungen übereinstimmen.

10. System (100) nach Anspruch 7, wobei der erste Satz von Prozeduren einen Satz von schwachstellenlokalisierten Prozeduren repräsentiert.

11. System (100) nach Anspruch 7, wobei der zweite Satz von Prozeduren einen Satz von nicht schwachstellenlokalisierten Prozeduren repräsentiert.

12. System (100) nach Anspruch 7, wobei die eine oder die mehreren Reparaturstrategien basierend auf dem Regeltyp der funktional geordneten Autoreparaturregel aus der Mehrzahl von funktional geordneten Autoreparaturregeln verwendet werden, die mit jeder der Mehrzahl von anfälligen Programmanweisungen übereinstimmen.

13. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Empfangen einer Anwendung in binärer Form und eines Satzes von vordefinierten Schwachstellenerkennungsregeln als eine Eingabe;
Erkennen einer Mehrzahl von anfälligen Programmfragmenten in der empfangenen Anwendung in binärer Form basierend auf dem Satz von vordefinierten Schwachstellenerkennungsregeln;
Erstellen einer Zuordnung zwischen der Anwendung in binärer Form und einer Mehrzahl von Quellcodedateien, die der Anwendung in binärer Form entsprechen, um eine Mehrzahl von anfälligen Quellcodeprogrammfragmenten zu identifizieren; und
Durchführen eines Autoreparaturprozesses an jedem der identifizierten Mehrzahl von anfälligen Quellcodeprogrammfragmenten, um eine Mehrzahl von sicheren Quellcodeprogrammfragmenten zu erhalten, wobei der Autoreparaturprozess Folgendes umfasst:
Extrahieren, basierend auf der erstellten Zuordnung, eines oder mehrerer Pfade, die einen Funktionalitätsaspekt der Anwendung in binärer Form darstellen, und einer Mehrzahl von anfälligen Programmanweisungen für jedes anfällige Quellcodeprogrammfragment aus der Mehrzahl von anfälligen Quellcodeprogrammfragmenten in der Anwendung in binärer Form;
Anwenden, gemäß einer Mehrzahl von vordefinierten Kriterien, einer funktional geordneten Autoreparaturregel aus einer Mehrzahl von funktional geordneten Autoreparaturregeln auf jede der Mehrzahl von anfälligen Programmanweisungen jedes Pfads aus dem einen oder den mehreren Pfaden;
Berechnen eines Effekts des Anwendens der funktional geordneten Autoreparaturregel auf eine Mehrzahl von nicht anfälligen Programmanweisungen innerhalb eines ersten Satzes von Prozeduren aus einem Satz von Prozeduren, die jedem des einen oder der mehreren Pfade zugeordnet sind, wobei die funktional geordnete Autoreparaturregel eine oder mehrere Reparaturstrategien verwendet, und wobei eine oder mehrere Inkonsistenzen in der Mehrzahl von nicht anfälligen Programmanweisungen innerhalb des ersten Satzes von Prozeduren aus dem Satz von Prozeduren erzeugt werden, die jedem des einen oder der mehreren Pfade zugeordnet sind, wenn die eine oder die mehreren Reparaturstrategien verwendet werden;
Auflösen der einen oder der mehreren Inkonsistenzen, die in der Mehrzahl von nicht anfälligen Programmanweisungen innerhalb des ersten Satzes von Prozeduren aus dem Satz von Prozeduren erzeugt werden, die jedem des einen oder der mehreren Pfade zugeordnet sind; und
iteratives Berechnen eines Effekts der Verwendung der einen oder der mehreren Reparaturstrategien auf einen zweiten Satz der Prozeduren aus dem Satz von Prozeduren und Auflösen der einen oder der mehreren Inkonsistenzen, die in dem zweiten Satz von Prozeduren aus dem Satz von Prozeduren erzeugt werden, die jedem des einen oder der mehreren Pfade zugeordnet sind.

14. Ein oder mehrere nichtflüchtige maschinenlesbare Informationsspeichermedien nach Anspruch 13, wobei der Funktionalitätsaspekt durch ein Funktionsgruppenattribut und ein Reihenfolgeattribut gekennzeichnet ist.

15. Ein oder mehrere nichtflüchtige maschinenlesbare Informationsspeichermedien nach Anspruch 13, wobei die Mehrzahl von vordefinierten Kriterien Folgendes beinhaltet: (i) Bestimmen des Typs jeder der Mehrzahl von anfälligen Programmanweisungen, (ii) Bestimmen einer funktional geordneten Autoreparaturregel aus der Mehrzahl von funktional geordneten Autoreparaturregeln, die mit jeder der Mehrzahl von anfälligen Programmanweisungen übereinstimmen, und (iii) Bestimmen eines Regeltyps der funktional geordneten Autoreparaturregel aus der Mehrzahl von funktional geordneten Autoreparaturregeln, die mit jeder der Mehrzahl von anfälligen Programmanweisungen übereinstimmen.

## Revendications

1. Procédé mis en oeuvre par processeur (200), comprenant :
la réception (202), via une interface d'entrée/sortie, d'une application sous forme binaire, et d'un ensemble de règles de détection de vulnérabilité prédéfinies en tant qu'entrée ;
la détection (204), via un premier module exécuté par un ou plusieurs processeurs matériels, d'une pluralité de fragments de programme vulnérables dans l'application reçue sous forme binaire sur la base de l'ensemble de règles de détection de vulnérabilité prédéfinies ;
la création (206), via un deuxième module exécuté par un ou plusieurs processeurs matériels, d'un mappage entre l'application sous forme binaire et une pluralité de fichiers de code source correspondant à l'application sous forme binaire pour identifier une pluralité de fragments de programme de code source vulnérables ; et
l'exécution (208), via un troisième module exécuté par un ou plusieurs processeurs matériels, d'un processus de réparation automatique sur chacun de la pluralité identifiée de fragments de programme de code source vulnérables pour obtenir une pluralité de fragments de programme de code source sûrs, dans lequel le processus de réparation automatique comprend :
l'extraction, d'un ou plusieurs chemins représentant un aspect de fonctionnalité de l'application sous forme binaire et d'une pluralité d'instructions de programme vulnérables pour chaque fragment de programme de code source vulnérable de la pluralité de fragments de programme de code source vulnérables dans l'application sous forme binaire sur la base du mappage créé ;
l'application, d'une règle de réparation automatique ordonnée fonctionnelle d'une pluralité de règles de réparation automatique ordonnées fonctionnelles conformément à une pluralité de critères prédéfinis à chacune de la pluralité d'instructions de programme vulnérables de chaque chemin des un ou plusieurs chemins ;
le calcul, d'un effet d'application de la règle de réparation automatique ordonnée fonctionnelle sur une pluralité d'instructions de programme non vulnérables dans un premier ensemble de procédures d'un ensemble de procédures associées à chacun des un ou plusieurs chemins, dans lequel la règle de réparation automatique ordonnée fonctionnelle utilise une ou plusieurs stratégies de réparation, et dans lequel une ou plusieurs incohérences sont générées dans la pluralité d'instructions de programme non vulnérables dans le premier ensemble de procédures de l'ensemble de procédures associées à chacun des un ou plusieurs chemins lorsque une ou plusieurs stratégies de réparation sont utilisées ;
la résolution, des une ou plusieurs incohérences générées dans la pluralité d'instructions de programme non vulnérables dans le premier ensemble de procédures de l'ensemble de procédures associées à chacun des un ou plusieurs chemins ; et
le calcul itératif, d'un effet d'utilisation des une ou plusieurs stratégies de réparation sur un second ensemble de procédures de l'ensemble de procédures et la résolution des une ou plusieurs incohérences générées dans le second ensemble de procédures de l'ensemble de procédures associées à chacun des un ou plusieurs chemins.

2. Procédé mis en oeuvre par processeur (200) selon la revendication 1, dans lequel l'aspect de fonctionnalité est **caractérisé par** un attribut de groupe fonctionnel et un attribut d'ordre.

3. Procédé mis en oeuvre par processeur (200) selon la revendication 1, dans lequel la pluralité de critères prédéfinis inclut (i) la détermination du type de chacune de la pluralité d'instructions de programme vulnérables, (ii) la détermination d'une règle de réparation automatique ordonnée fonctionnelle de la pluralité de règles de réparation automatique ordonnées fonctionnelles correspondant à chacune des pluralités d'instructions de programme vulnérables, et (iii) la détermination d'un type de règle de la règle de réparation automatique ordonnée fonctionnelle de la pluralité de règles de réparation automatique ordonnées fonctionnelles correspondant à chacune des pluralités d'instructions de programme vulnérables.

4. Procédé mis en oeuvre par processeur (200) selon la revendication 1, dans lequel le premier ensemble de procédures représente un ensemble de procédures à vulnérabilité localisée.

5. Procédé mis en oeuvre par processeur (200) selon la revendication 1, dans lequel le second ensemble de procédures représente un ensemble de procédures à non vulnérabilité localisée.

6. Procédé mis en oeuvre par processeur (200) selon la revendication 1, dans lequel une ou plusieurs stratégies de réparation sont utilisées sur la base du type de règle de la règle de réparation automatique ordonnée fonctionnelle de la pluralité de règles de réparation automatique ordonnées fonctionnelles correspondant à chacune des pluralités d'instructions de programme vulnérables.

7. Système (100), comprenant :
une mémoire (102) stockant des instructions ;
une ou plusieurs interfaces de communication (106) ; et
un ou plusieurs processeurs matériels (104) couplés à la mémoire (102) via une ou plusieurs interfaces de communication (106), dans lequel un ou plusieurs processeurs matériels (104) sont configurés par les instructions pour :
recevoir, une application sous forme binaire et un ensemble de règles de détection de vulnérabilité prédéfinies en tant qu'entrée ;
détecter, une pluralité de fragments de programme vulnérables dans l'application reçue sous forme binaire sur la base de l'ensemble de règles de détection de vulnérabilité prédéfinies ;
créer, un mappage entre l'application sous forme binaire et une pluralité de fichiers de code source correspondant à l'application sous forme binaire pour identifier une pluralité de fragments de programme de code source vulnérables ; et
exécuter, un processus de réparation automatique sur chacun de la pluralité identifiée de fragments de programme de code source vulnérables pour obtenir une pluralité de fragments de programme de code source sûrs, dans lequel le processus de réparation automatique comprend :
l'extraction, d'un ou plusieurs chemins représentant un aspect de fonctionnalité de l'application sous forme binaire et d'une pluralité d'instructions de programme vulnérables pour chaque fragment de programme de code source vulnérable de la pluralité de fragments de programme de code source vulnérables dans l'application sous forme binaire sur la base du mappage créé ;
l'application, d'une règle de réparation automatique ordonnée fonctionnelle parmi une pluralité de règles de réparation automatique ordonnées fonctionnelles conformément à une pluralité de critères prédéfinis à chacune de la pluralité d'instructions de programme vulnérables de chaque chemin des un ou plusieurs chemins ;
le calcul, d'un effet d'application de la règle de réparation automatique ordonnée fonctionnelle sur une pluralité d'instructions de programme non vulnérables dans un premier ensemble de procédures d'un ensemble de procédures associées à chacun des un ou plusieurs chemins, dans lequel la règle de réparation automatique ordonnée fonctionnelle utilise une ou plusieurs stratégies de réparation, et dans lequel une ou plusieurs incohérences sont générées dans la pluralité d'instructions de programme non vulnérables dans le premier ensemble de procédures de l'ensemble de procédures associées à chacun des un ou plusieurs chemins lorsque une ou plusieurs stratégies de réparation sont utilisées ;
la résolution, des une ou plusieurs incohérences générées dans la pluralité d'instructions de programme non vulnérables dans le premier ensemble de procédures de l'ensemble de procédures associées à chacun des un ou plusieurs chemins ; et
le calcul itératif, d'un effet d'utilisation des une ou plusieurs stratégies de réparation sur un second ensemble des procédures de l'ensemble de procédures et la résolution des une ou plusieurs incohérences générées dans le second ensemble de procédures de l'ensemble de procédures associées à chacun des un ou plusieurs chemins.

8. Système (100) selon la revendication 7, dans lequel l'aspect de fonctionnalité est **caractérisé par** un attribut de groupe fonctionnel et un attribut d'ordre.

9. Système (100) selon la revendication 7, dans lequel la pluralité de critères prédéfinis inclut (i) la détermination du type de chacune de la pluralité d'instructions de programme vulnérables, (ii) la détermination d'une règle de réparation automatique ordonnée fonctionnelle de la pluralité de règles de réparation automatique ordonnées fonctionnelles correspondant à chacune des pluralités d'instructions de programme vulnérables, et (iii) la détermination d'un type de règle de la règle de réparation automatique ordonnée fonctionnelle de la pluralité de règles de réparation automatique ordonnées fonctionnelles correspondant à chacune des pluralités d'instructions de programme vulnérables.

10. Système (100) selon la revendication 7, dans lequel le premier ensemble de procédures représente un ensemble de procédures à vulnérabilité localisée.

11. Système (100) selon la revendication 7, dans lequel le second ensemble de procédures représente un ensemble de procédures à non vulnérabilité localisée.

12. Système (100) selon la revendication 7, dans lequel une ou plusieurs stratégies de réparation sont utilisées sur la base du type de règle de la règle de réparation automatique ordonnée fonctionnelle de la pluralité de règles de réparation automatique ordonnées fonctionnelles correspondant à chacune des pluralités d'instructions de programme vulnérables.

13. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une application sous forme binaire, et d'un ensemble de règles de détection de vulnérabilité prédéfinies en tant qu'entrée ;
la détection d'une pluralité de fragments de programme vulnérables dans l'application reçue sous forme binaire sur la base de l'ensemble de règles de détection de vulnérabilité prédéfinies ;
la création d'un mappage entre l'application sous forme binaire et une pluralité de fichiers de code source correspondant à l'application sous forme binaire pour identifier une pluralité de fragments de programme de code source vulnérables ; et
l'exécution d'un processus de réparation automatique sur chacun de la pluralité identifiée de fragments de programme de code source vulnérables pour obtenir une pluralité de fragments de programme de code source sûrs, dans lequel le processus de réparation automatique comprend :
l'extraction, d'un ou plusieurs chemins représentant un aspect de fonctionnalité de l'application sous forme binaire et d'une pluralité d'instructions de programme vulnérables pour chaque fragment de programme de code source vulnérable de la pluralité de fragments de programme de code source vulnérables dans l'application sous forme binaire sur la base du mappage créé ;
l'application, d'une règle de réparation automatique ordonnée fonctionnelle d'une pluralité de règles de réparation automatique ordonnées fonctionnelles conformément à une pluralité de critères prédéfinis à chacune de la pluralité d'instructions de programme vulnérables de chaque chemin des un ou plusieurs chemins ;
le calcul, d'un effet d'application de la règle de réparation automatique ordonnée fonctionnelle sur une pluralité d'instructions de programme non vulnérables dans un premier ensemble de procédures d'un ensemble de procédures associées à chacun des un ou plusieurs chemins, dans lequel la règle de réparation automatique ordonnée fonctionnelle utilise une ou plusieurs stratégies de réparation, et dans lequel une ou plusieurs incohérences sont générées dans la pluralité d'instructions de programme non vulnérables dans le premier ensemble de procédures de l'ensemble de procédures associées à chacun des un ou plusieurs chemins lorsque une ou plusieurs stratégies de réparation sont utilisées ;
la résolution, des une ou plusieurs incohérences générées dans la pluralité d'instructions de programme non vulnérables dans le premier ensemble de procédures de l'ensemble de procédures associées à chacun des un ou plusieurs chemins ; et
le calcul itératif, d'un effet d'utilisation des une ou plusieurs stratégies de réparation sur un second ensemble des procédures de l'ensemble de procédures et la résolution des une ou plusieurs incohérences générées dans le second ensemble de procédures de l'ensemble de procédures associées à chacun des un ou plusieurs chemins.

14. Un ou plusieurs supports de stockage d'informations lisibles par machine non transitoires selon la revendication 13, dans lesquels l'aspect de fonctionnalité est **caractérisé par** un attribut de groupe fonctionnel et un attribut d'ordre.

15. Un ou plusieurs supports de stockage d'informations lisibles par machine non transitoires selon la revendication 13, où la pluralité de critères prédéfinis inclut (i) la détermination du type de chacune des pluralités d'instructions de programme vulnérables, (ii) la détermination d'une règle de réparation automatique ordonnée fonctionnelle parmi la pluralité de règles de réparation automatique ordonnées fonctionnelles correspondant à chacune des pluralités d'instructions de programme vulnérables, et (iii) la détermination d'un type de règle de la règle de réparation automatique ordonnée fonctionnelle parmi la pluralité de règles de réparation automatique ordonnées fonctionnelles correspondant à chacune des pluralités d'instructions de programme vulnérables.
